# EUROPÄISCHE PATENTSCHRIFT

(11) **EP 1 305 642 B1**
(45) Veröffentlichungstag und Bekanntmachung des Hinweises auf die Patenterteilung: **04.10.2006**
(21) Anmeldenummer: 01962580.5
(22) Anmeldetag: 26.07.2001
(51) Int. Cl.: G01P 15/08, G01P 15/16

(54) **BESCHLEUNIGUNGSMESSVORRICHTUNG**
DEVICE FOR MEASURING ACCELERATION
DISPOSITIF DE MESURE D'ACCELERATION

(30) Priorität: 03.08.2000 DE 10039324
(43) Veröffentlichungstag der Anmeldung: 02.05.2003
(73) Patentinhaber: Hübner Elektromaschinen GmbH, 10967 Berlin (DE)
(72) Erfinder: WILHELMY, Lothar, 14195 Berlin (DE); SAWITZKI, Uwe, 12307 Berlin (DE); HILLER, Bernhard, 10115 Berlin (DE)
(74) Vertreter: Grünecker, Kinkeldey, Stockmair & Schwanhäusser Anwaltssozietät
(86) Internationale Anmeldenummer: PCT/DE2001/002872
(87) Internationale Veröffentlichungsnummer: WO 2002/012904

(56) Entgegenhaltungen:
- DE-A- 19 828 372
- FR-A- 1 449 316
- US-A- 2 460 115

## Beschreibung

### Technisches Gebiet

Die Erfindung betrifft eine Vorrichtung zum Messen von Beschleunigungen, insbesondere Linearbeschleunigungen, mit Hilfe eines aus elektrisch leitendem Material bestehenden Meßmittels, das ständig senkrecht vom Feld eines, jeweils mindestens zwei im Abstand vom Meßmittel angeordnete Permanentmagnete aufweisenden primären Magnetkreises durchsetzt wird, der bei einer Bewegung zwischen ihm und dem Meßmittel Wirbelströme im Meßmittel erzeugt, die ihrerseits zur Entstehung eines sekundären Magnetfeldes führen, dessen Änderungen durch Sensorwicklungen erfaßt werden.

### Stand der Technik

Aus der DE 198 28 372 A1 ist eine Vorrichtung der vorstehenden Art bekannt, bei der zur Halterung der auf sich gegenüberliegenden Seiten des Meßmittels angeordneten Permanentmagnete ein im wesentlichen U-förmiger Träger mit zwei über ein Joch miteinander verbundenen Schenkeln dient. Die Permanentmagnete sind dabei so gepolt, daß der von ihnen gebildete primäre Magnetkreis über das Joch des Trägers geschlossen wird. Die bekannte Vorrichtung vermag insofern nicht voll zu befriedigen als die Anordnung des Meßmittels in einem an drei Seiten geschlossenen, hinsichtlich seiner Tiefe regelmäßig begrenzten Spalt bei einem fertigungsbedingt nicht immer ganz zu vermeidenden Seiten- oder Höhenversatz des Meßmittels zu einer unerwünschten Modulation von Meßwerten führen kann. Hinzukommt, daß eine beidseitige Umschließung des Meßmittels insbesondere bei der Überwachung von Linearbewegungen ausführenden Schlitten von Werkzeugmaschinen insofern Probleme mit sich bringt als das Meßmittel frei in den Raum ragen, d.h. vergleichsweise steif und mithin dick sein muß.

Die Schrift US 2460115 offenbart eine weitere gattungsgemäße Vorrichtung zum Messen von Linearbeschleunigungen, mit einem aus elektrisch leitendem Material bestehenden Messmittel, mit mindestens zwei im Abstand vom Messmittel nebeneinander angeordneten, gegenläufig gepolten Permanentmagneten, sowie mit Sensorwicklungen, wobei Permanentmagnete und Sensorwicklungen von einem gemeinsamen magnetisch leitenden Träger gehalten werden.

### Darstellung der Erfindung

Der Erfindung liegt die Aufgabe zugrunde, eine Vorrichtung der in Betracht gezogenen Art zu schaffen, bei der die von einer möglichst geringen Zahl von Wirbelströmen erzeugten sekundären Magnetfelder möglichst vollständig erfaßt werden. Bei einer Vorrichtung nach dem Oberbegriff des Anspruches 1 ist im Abstand vom Meßmittel ein zur Halterung der Permanentmagnete dienender, magnetisch leitender Träger so angeordnet, daß die nebeneinander angeordneten Permanentmagnete zwecks Feldumlenkung gegenläufig gepolt sind und daß vom Träger auch die Sensorwicklungen gehalten werden.

Eine solche Vorrichtung ermöglicht eine einseitige Anordnung der Magnete und Sensorwicklungen gegenüber dem Meßmittel, das beispielsweise aus einem an der Längsseite eines Maschinenschlittens angeordneten Aluminium- oder Kupferstreifen bestehen kann. Die gegenläufige Polung der Permanentmagnete erlaubt es, mit vergleichsweise kleinen Magneten ein starkes primäres Magnetfeld zu erzeugen, das das Meßmittel an nur zwei Stellen durchstößt.

Als besonders vorteilhaft erweist es sich, wenn gemäß der Erfindung die von den Sensorwicklungen umschlossene Längsachse im wesentlichen parallel zur Relativbewegung zwischen dem Meßmittel und dem Träger verläuft und die Sensorwicklungen im Bereich der Rückseite der Magnete angeordnet sind.

### Kurze Beschreibung der Zeichnungen

Weitere Merkmale und Einzelheiten der Erfindung ergeben sich aus den abhängigen Ansprüchen und der nachstehenden Beschreibung mehrerer in der beigefügten Zeichnung dargestellter Ausführungsformen. Es zeigen:
- Fig. 1: stark schematisiert und teilweise im Schnitt eine perspektivische Ansicht der wesentlichen Teile einer ersten besonders vorteilhaften Vorrichtung;
- Fig. 2: eine schematisierte Darstellung der Wirbelströme im Meßmittel und der Magnetkreise;
- Fig. 3: eine der Fig. 1 entsprechende Ansicht durch eine zweite Ausführungsform;
- Fig. 4: eine der Fig. 2 entsprechende schematische Darstellung;
- Fig. 5: eine der Fig. 1 entsprechende Ansicht einer dritten Ausführungsform;
- Fig. 6: eine der Fig. 1 entsprechende Ansicht einer herkömmlichen Vorrichtung und
- Fig. 7: zwei nebeneinander und zwar quer zur Meßrichtung angeordnete Vorrichtungen gemäß Fig. 1.

### Wege zur Ausführung der Erfindung

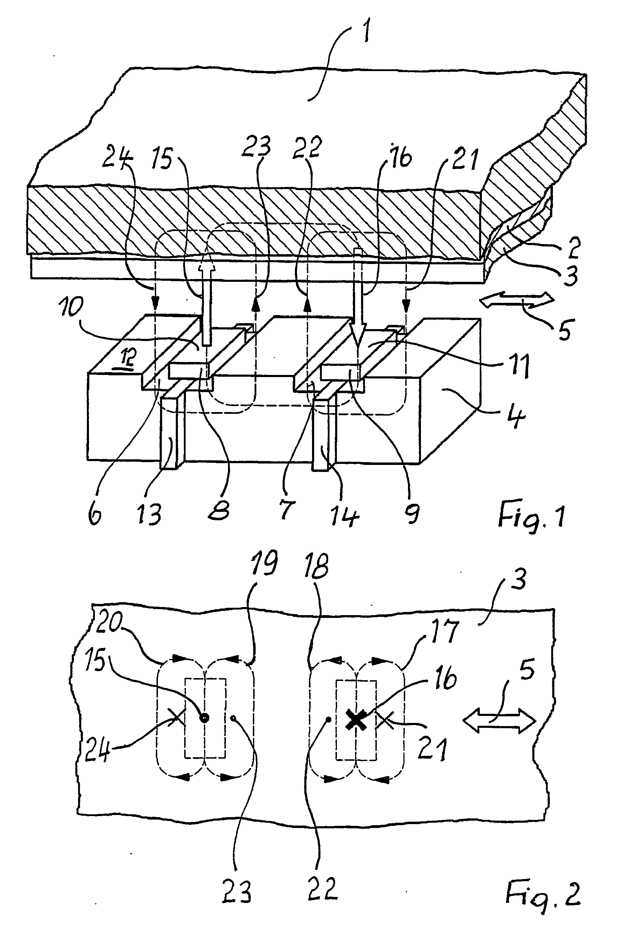

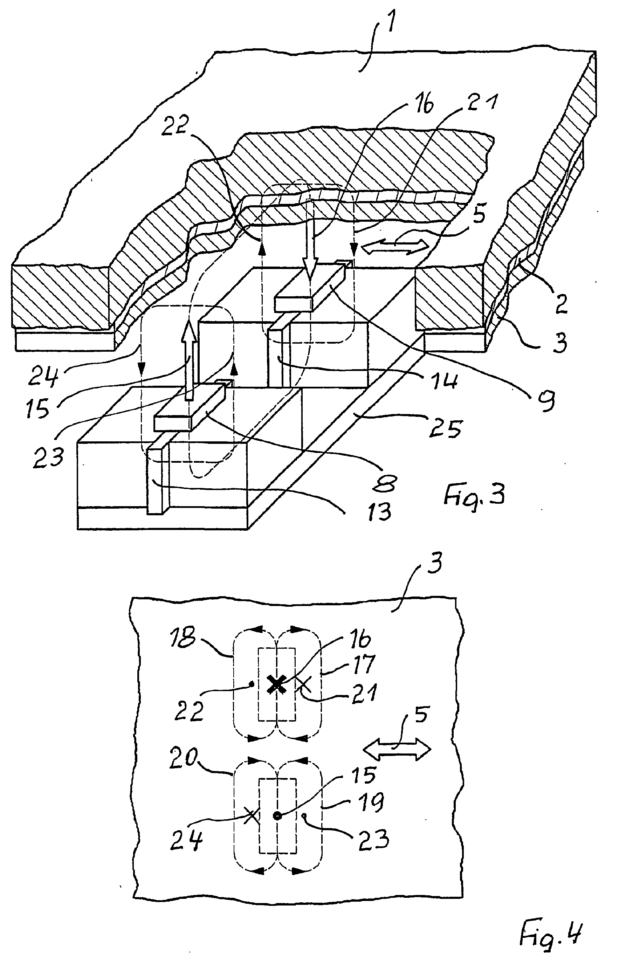

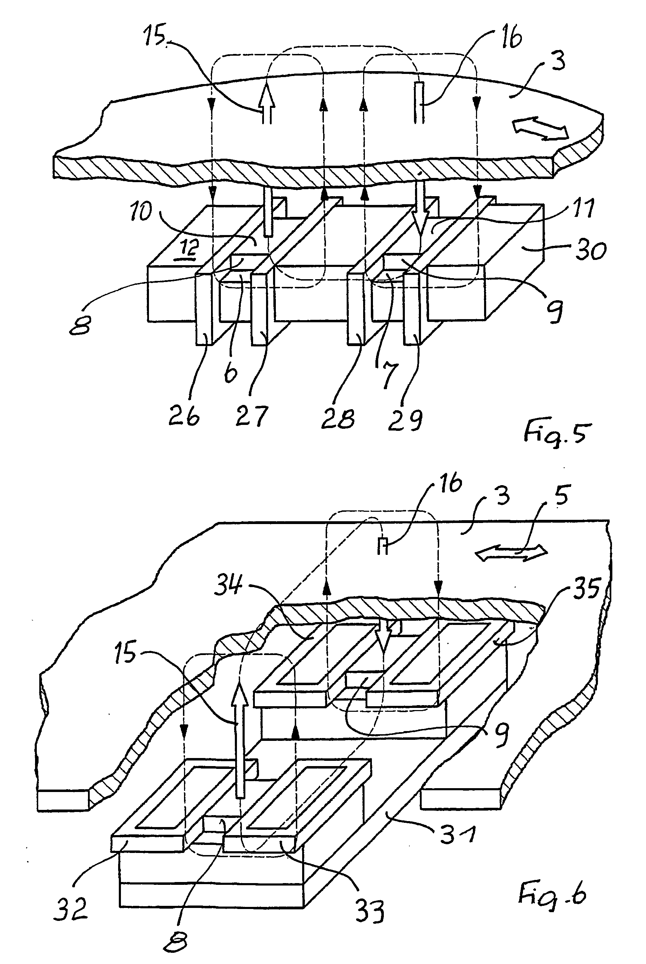

In Fig. 1 ist 1 ein Bauteil, an dem unter Zwischenschaltung einer Haftmittelschicht 2 ein streifenförmiges Meßmittel 3 angeordnet ist, das gegenüber einem Träger 4 lineare Relativbewegungen in Richtung des Doppelpfeiles 5 ausführen kann. Während das Meßmittel 3 aus einem nichtmagnetischen, aber elektrisch leitenden Material wie Aluminium oder Kupfer besteht, ist das für die Herstellung des Bauteils 1 und des Trägers 4 verwendete Material sowohl magnetisch als auch elektrisch leitend, wobei es auf die elektrische Leitfähigkeit nicht ankommt.

Der sich in Richtung der Relativbewegung erstreckende Träger 4 weist zwei Nuten 6 und 7 auf, in denen zwei Permanentmagnete 8 und 9 angeordnet sind. Die Stirnflächen 10, 11 der Permanentmagnete 6, 7 fluchten mit den dem Meßmittel 3 zugewandten Außenflächen 12 des Trägers 4. An der Rückseite eines jeden Permanentmagneten 8 bzw. 9 ist jeweils eine Sensorwicklung 13 bzw. 14 angeordnet. Die Lage der Wicklungen ist dabei so gewählt, daß die von den Wicklungen umschlossene Achse parallel zum Meßmittel 3 bzw. zur Relativbewegung zwischen letzterem und dem Träger 4 verläuft. Da die Sensorwicklungen 13, 14 beidseits über die Seitenflächen des Trägers 4 und der Permanentmagnete 8, 9 vorstehen, wird das Feld des auf sie einwirkenden, durch die im Meßmittel 3 wirksamen Wirbelströme induzierten sekundären Magnetkreises optimal erfaßt.

Der Pfeil 15 in Fig. 1, der in Fig. 2 als Punkt dargestellt ist, symbolisiert das Magnetfeld des Permanentmagneten 8, während der Pfeil 16, der in Fig. 2 als Kreuz erscheint, das Feld des Permanentmagneten 9 symbolisiert. Die Pfeile 15 und 16 machen deutlich, daß die Felder der Permanentmagnete 8 und 9 entgegengesetzt gerichtet sind. Das Magnetfeld 15 durchdringt das Meßmittel 3 und das Bauteil 1 und schließt sich über das Magnetfeld 16 und den Tragkörper 4. Die das Meßmittel 3 an zwei Stellen durchstoßenden Magnetfelder 15, 16 rufen im Meßmittel 3 jeweils zwei, d.h. insgesamt vier Wirbelströme 17, 18, 19 und 20 hervor, die ihrerseits zur Entstehung von vier sekundäre Magnetkreise bildenden Magnetfeldern 21, 22, 23 und 24 führen. Die dargestellte Anordnung zeichnet sich durch eine hohe Empfindlichkeit aus, da die sekundären Magnetfelder 21, 22, 23, 24 Magnetkreise 21, 22 bzw. 23, 24 bilden, die alle den unterhalb der Permanentmagnete 8, 9 gelegenen Bereich des Tragkörpers passieren. Als positiv erweist sich bei dieser Ausführung zudem der Umstand, daß der Wickelaufwand aufgrund der gewählten Anordnung der Sensorwicklungen 13, 14 gering ist.

Während sich der Träger 4 bei dem Ausführungsbeispiel gemäß Fig. 1 und 2 in Längsrichtung des Meßmittels 3 bzw. parallel zur Bewegungsrichtung erstreckt, wurde für den Träger 25 in den Figuren 3 und 4 eine um 90° versetzte Lage gewählt. Auch in diesem Fall sind die hier wie alle übrigen gleichwirkenden Teile mit den gleichen Bezugszeichen wie in den Figuren 1 und 2 versehenen Sensorwicklungen 13 und 14 an der Rückseite der Permanentmagnete 8, 9 angeordnet, wobei allerdings auf eine Absenkung der Magnete gegenüber der Außenfläche 12 des Trägers 25 verzichtet wurde. Zur Wirkungsweise der Vorrichtung gemäß den Figuren 3 und 4 wird auf die Ausführungen zu den Figuren 1 und 2 verwiesen.

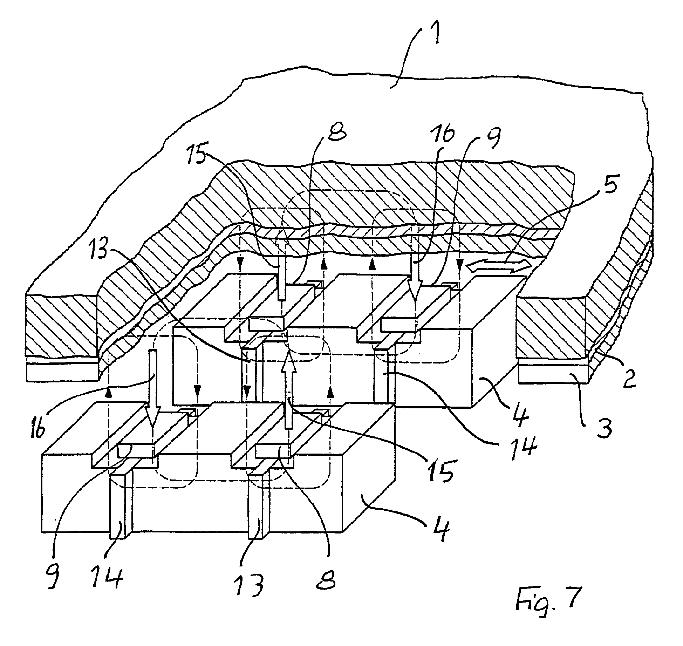

Fig. 5 zeigt eine Lösung, bei der nicht die Beschleunigungen eines hin- und herbewegten, sondern eines rotierenden Meßmittels 3 erfaßt werden. Der mit vier Sensorwicklungen 26, 27, 28, 29 ausgestattete Träger 30 zeichnet sich durch eine besonders flache Bauweise aus, da die Sensorwicklungen 26 bis 29 nicht unterhalb, sondern paarweise neben den Permanentmagneten 8, 9 angeordnet sind.

In Fig. 6 ist eine herkömmliche Anordnung mit einem Träger 31 für Sensorwicklungen 32, 33, 34 und 35 dargestellt, die anders als die zuvor beschriebenen Sensorwicklungen eine Längsachse umschließen, die senkrecht zur Relativbewegung zwischen dem Meßmittel 3 und dem Träger 31 verläuft. Hinsichtlich ihrer grundsätzlichen Wirkungsweise unterscheiden sich die dargestellten und beschriebenen Vorrichtungen nicht voneinander.

Es besteht im übrigen die Möglichkeit, Lösungen gemäß Fig. 1 nebeneinander und zwar quer zur Meßrichtung und Lösungen gemäß Fig. 3 in Meßrichtung hintereinander anzuordnen, wobei die in Fig. 7 gezeigte Anordnung sich als besonders vorteilhaft erweist.

## Patentansprüche

1. Vorrichtung zum Messen von Beschleunigungen, insbesondere Linearbeschleunigungen, mit Hilfe eines aus elektrisch leitendem Material bestehenden Messmittels (3), das ständig senkrecht vom Feld eines, jeweils mindestens zwei im Abstand vom Messmittel(3)nebeneinander angeordnete und zwecks Feldumlenkung gegenläufig gepolte Permanentmagnete (8,9) aufweisenden primären Magnetkreises durchsetzt wird, der bei einer Bewegung zwischen ihm und dem Messmittel(3) Wirbelströme im Messmittel (3) erzeugt, die ihrerseits zur Entstehung eines sekundären Magnetfeldes führen, dessen Änderungen durch Sensorwicklungen erfasst werden, wobei im Abstand vom Messmittel (3) mindestens ein zur Halterung der Permanentmagnete (8, 9) dienender, magnetisch leitender Träger (4; 25; 30; 31) angeordnet ist, von dem auch die Sensorwicklungen (13, 14; 26-29; 32-35) gehalten werden,**dadurch gekennzeichnet, dass** die von den Sensorwicklungen (13, 14; 26-29) umschlossene Längsachse im Wesentlichen parallel zur Relativbewegung zwischen dem Messmittel (3) und dem Träger (4; 25; 30) verläuft.

2. Vorrichtung nach Anspruch 1, **dadurch gekennzeichnet, dass** die Sensorwicklungen (13, 14; 26-29; 32-35), in Längsrichtung der Permanentmagnete (8, 9) betrachtet, beidseits über die Seitenflächen der Permanentmagnete (8, 9) vorstehen.

3. Vorrichtung nach Anspruch 1 oder 2, **dadurch gekennzeichnet, dass** die Permanentmagnete (8, 9) in Nuten (6, 7) des Trägers (4) angeordnet sind und ihre dem Messmittel (3) zugewandten Stirnflächen (10, 11) mit der dem Messmittel (3) zugewandten Außenfläche (12) des Trägers (4) fluchten.

4. Vorrichtung nach einem der Ansprüche 1 bis 3, **dadurch gekennzeichnet, dass** die Permanentmagnete (8, 9) in Richtung der Relativbewegung hintereinander angeordnet sind.

5. Vorrichtung nach einem der Ansprüche 1 bis 4, **dadurch gekennzeichnet, dass** die Sensorwicklungen (13, 14) im Bereich der Rückseite der Permanentmagnete (8, 9) angeordnet sind.

6. Vorrichtung nach einem der Ansprüche 1 bis 5, **dadurch gekennzeichnet, dass** das Messmittel (3) unter Zwischenschaltung einer Haftmittelschicht (2) mit einem von einem Maschinenschlitten gebildeten Bauteil (1) verbunden ist.

7. Anordnung zum Messen von Beschleunigungen, insbesondere Linearbeschleunigungen, **dadurch gekennzeichnet, dass** sie mindestens zwei Vorrichtungen gemäß einem der Ansprüche 1 bis 5 umfasst, die quer zur Richtung der Relativbewegung zwischen ihren Trägern (4) und dem Messmittel (3) nebeneinander angeordnet sind.

## Claims

1. Device for measuring acceleration, in particular linear acceleration, with the aid of a measuring means (3), which consists of an electrically conductive material and through which the field of a primary magnetic circuit, which has in each case at least two permanent magnets (8, 9) which are arranged next to one another at a distance from the measuring means (3) and are of opposite polarity for field deflection purposes, is continuously passed perpendicularly, said primary magnetic circuit generating eddy currents in the measuring means (3) in the event of a movement between it and the measuring means (3), said eddy currents for their part resulting in the generation of a secondary magnetic field, whose changes are sensed by sensor windings, at least one magnetically conductive carrier (4; 25; 30; 31), which is used for holding the permanent magnets (8, 9), being arranged at a distance from the measuring means (3), the sensor windings (13, 14; 26-29; 32-35) also being held by said carrier, **characterized in that** the longitudinal axis surrounded by the sensor windings (13, 14; 26-29) runs essentially parallel to the relative movement between the measuring means (3) and the carrier (4; 25; 30).

2. Device according to Claim 1, **characterized in that** the sensor windings (13, 14; 26-29; 32-35), when viewed in the longitudinal direction of the permanent magnets (8, 9), protrude on both sides beyond the side faces of the permanent magnets (8, 9).

3. Device according to Claim 1 or 2, **characterized in that** the permanent magnets (8, 9) are arranged in grooves (6, 7) in the carrier (4), and their end faces (10, 11), which face the measuring means (3), are aligned with the outer face (12), which faces the measuring means (3), of the carrier (4).

4. Device according to one of Claims 1 to 3, **characterized in that** the permanent magnets (8, 9) are arranged one behind the other in the direction of the relative movement.

5. Device according to one of Claims 1 to 4, **characterized in that** the sensor windings (13, 14) are arranged in the region of the rear side of the permanent magnets (8, 9).

6. Device according to one of Claims 1 to 5, **characterized in that** the measuring means (3) is connected to a component (1), which is formed by a machine slide, with an adhesive layer (2) interposed.

7. Arrangement for measuring acceleration, in particular linear acceleration, **characterized in that** it comprises at least two devices according to one of Claims 1 to 5, which are arranged next to one another transversely with respect to the direction of the relative movement between their carriers (4) and the measuring means (3).

## Revendications

1. Dispositif pour mesurer des accélérations, en particulier des accélérations linéaires, à l'aide d'un moyen de mesure (3) constitué d'un matériau électroconducteur qui est traversé en continu perpendiculairement par le champ d'un circuit magnétique primaire présentant respectivement au moins deux aimants permanents (8, 9) disposés l'un à côté de l'autre à distance du moyen de mesure (3) et polarisés à contre-courant à des fins de dérivation de champ, lequel circuit produit, lors d'un mouvement, entre lui et le moyen de mesure (3), des courants de Foucault dans le moyen de mesure (3) qui à leur tour entraînent l'apparition d'un champ magnétique secondaire dont les modifications sont détectées par des bobines de détection, moyennant quoi, à distance du moyen de mesure (3) est disposé au moins un support magnétiquement conducteur (4 ; 25 ; 30 ; 31) servant au maintien des aimants permanents (8, 9) et par lequel sont également maintenues les bobines de détection (13, 14 ; 26-29 ; 32-35), **caractérisé en ce que** l'axe longitudinal entouré par les bobines de détection (3, 14 ; 26-29) est sensiblement parallèle au mouvement relatif entre le moyen de mesure (3) et le support (4 ; 25 ; 30).

2. Dispositif selon la revendication 1, **caractérisé en ce que** les bobines de détection (13; 14 ; 26-29 ; 32-35), vu dans le sens de la longueur des aimants permanents (8, 9), dépassent de part et d'autre au-dessus des surfaces latérales des aimants permanents (8, 9).

3. Dispositif selon la revendication 1 ou 2, **caractérisé en ce que** les aimants permanents (8, 9) sont disposés dans des rainures (6, 7) du support (4) et **en ce que** leurs surfaces frontales (10, 11) orientées face au moyen de mesure (3) affleurent avec la surface extérieure (12) du support (4) orientée face au moyen de mesure (3).

4. Dispositif selon une des revendications 1 à 3, **caractérisé en ce que** les aimants permanents (8, 9) sont disposés l'un derrière l'autre dans le sens du mouvement relatif.

5. Dispositif selon une des revendications 1 à 4, **caractérisé en ce que** les bobines de détection (13, 14) sont disposées dans la zone de la face arrière des aimants permanents (8, 9).

6. Dispositif selon une des revendications 1 à 5, **caractérisé en ce que** le moyen de mesure (3) est relié à un composant (1) formé par un coulisseau de machine en intercalant une couche d'adhésif (2).

7. Agencement pour mesurer des accélérations, en particulier des accélérations linéaires, **caractérisé en ce qu'**il comprend au moins deux dispositifs selon une des revendications 1 à 5, qui sont disposés l'un à côté de l'autre transversalement au sens du mouvement relatif entre leurs supports (4) et le moyen de mesure (3).
